# EUROPÄISCHE PATENTSCHRIFT

(11) **EP 0 864 602 B1**
(45) Veröffentlichungstag und Bekanntmachung des Hinweises auf die Patenterteilung: **15.09.2004**
(21) Anmeldenummer: 98103629.6
(22) Anmeldetag: 02.03.1998
(51) Int. Cl.: C08J 9/14, C08G 18/50, C08G 18/48

(54) **Verfahren zur Herstellung von Polyurethan-Hartschaumstoffen mit verringerter Rohdichte**
Process for the preparation of rigid polyurethane foams of low apparent density
Procédé de préparation de mousses rigides de polyuréthane de faible densité apparente

(30) Priorität: 11.03.1997 DE 19709868
(43) Veröffentlichungstag der Anmeldung: 16.09.1998
(73) Patentinhaber: BASF AKTIENGESELLSCHAFT, 67056 Ludwigshafen (DE)
(72) Erfinder: Knorr, Gottfried, Dr., 01987 Schwarzheide (DE); Rotermund, Udo, Dr., 01990 Ortrand (DE); Baum, Eva, 01987 Schwarzheide (DE); Seifert, Holger, Dr., 49448 Hüde (DE); Wiegmann, Werner, 32369 Rahdem (DE)

(56) Entgegenhaltungen:
- EP-A- 0 421 269
- EP-A- 0 708 127
- WO-A-97/21765
- DE-A- 19 546 461
- US-A- 5 525 641

## Beschreibung

Die vorliegende Erfindung betrifft ein Verfahren zur Herstellung von Polyurethan (PUR)-Hartschaumstoffen mit niedriger Rohdichte und niedriger Wärmeleitfähigkeit sowie deren Verwendung als Isoliermaterial.

PUR-Hartschaumstoffe sind seit langem bekannt und werden vorwiegend zur Wärme- oder Kälteisolation, z.B. in Kühlgeräten, im Bauwesen, in Warmwasserspeichern und Fernwärmerohren, benutzt. Eine zusammenfassende Übersicht über die Herstellung und Verwendung von PUR-Hartschaumstoffen ist der Fachliteratur, beispielsweise der Monographie von J. H. Saunders und K. C. Frisch "High Polymers", Band XVI, Polyurethanes, Teil 1 und 2, Verlag Interscience Publishers, 1962 bzw. 1964 oder dem Kunststoffhandbuch, Polyurethane, Band VII, Carl-Hanser-Verlag, München, Wien, 1., 2. und 3. Auflage, 1966, 1983 bzw. 1993, zu entnehmen.

Als Treibmittel zur Herstellung dieser Schaumstoffe setzte man bis in die jüngste Zeit Fluorchlorkohlenwasserstoffe (FCKW), vor allem das Trichlorfluormethan, ein. Diese FCKW müssen wegen ihrer zerstörenden Wirkung auf die globale Ozonschicht durch Stoffe substituiert werden, die kein diese Ozonschicht schädigendes Potential (Ozone Depletion Potential, ODP) und einen möglichst geringen Treibhauseffekt (Global Warming Potential, GWP) aufweisen.

Aus diesen Gründen wurden Kohlenwasserstoffe als Treibmittel der Zukunft vorgeschlagen. Eine herausragende Rolle unter den Kohlenwasserstoffen nehmen die Isomere des Pentans ein, die wegen ihrer relativ niedrigen Siedepunkte recht gut als Treibmittel zur Herstellung von Hartschaumstoffen auf Isocyanatbasis geeignet sind. Die Anwendung von Pentanderivaten wird bereits in der 3.Auflage des Kunststoff-Handbuches, herausgegeben von G. Becker und D. Braun, Band 7, herausgegeben von G. Oertel, Carl Hanser Verlag, München, Wien, 1993, z.B. auf Seite 115 ff. erwähnt.

Es hat sich gezeigt, daß das Cyclopentan gegenüber n- und iso-Pentan Schaumstoffe niedrigerer Wärmeleitfähigkeit ergibt (EP-A-O 421 269) und damit das Cyclopentan oder dessen Gemische mit Stoffen, die unter 35°C sieden, die bisher besten halogenfreien Treibmittelvarianten darstellen.

Das Cyclopentan hat sich in den letzten 2 Jahren in der europäischen Kühlmöbelindustrie bereits durchgesetzt. Aus Kostengründen und wegen der etwas stärkeren Treibwirkung setzt man jedoch auch n-Pentan oder iso-Pentan und andere niedrigsiedende Kohlenwasserstoffe als Treibmittel ein, obwohl diese schlechtere Wärmeleitfähigkeitswerte als Cyclopentan ergeben.

Obwohl bei Verwendung dieser Kohlenwasserstoffe, einschließlich des Cyclopentans, zu Isolationszwecken sehr gut brauchbare Schaumstoffe erhalten werden, weisen diese gegenüber den FCKW getriebenen Produkten noch Nachteile, insbesondere hinsichtlich der erreichbaren Rohdichte bei ausreichender Druckfestigkeit und Dimensionsstabilität auf. Der Einsatz von Cyclopentan und dem aus Wasser und Isocyanat entstehenden Kohlendioxid ergibt freigeschäumte Rohdichten von ca. 30 kg/m³ im Labormaßstab, so daß z.B. für Kühlschränke eine Schaumdichte von ca. 36 kg/m³ erforderlich ist, um Schäume mit der erforderlichen Druckfestigkeit und Dimensionsstabilität zu produzieren.

Gegenüber den mit Trichlorfluormethan getriebenen Hartschäumen bedeutet das eine Erhöhung der Schaumdichte von 10 % und damit höhere Produktionskosten bei der Herstellung von z.B. Kühlgeräten durch einen höheren Materialeinsatz. Bedingt durch den Partialdampfdruck des Cyclopentans bei Raumtemperatur gelingt es nicht, mehr als 38 % des Zellgasanteils zu erzielen. Eine Erhöhung des Cyclopentananteils führt also zu einer Kondensation von Cyclopentan in den Zellen und trägt nicht mehr zu einer Rohdichteerniedrigung des Schaumes bei.

Eine mögliche Erniedrigung der Schaumdichte von mit Cyclopentan getriebenen Hartschäumen durch eine Verringerung des Überfüllungsgrades führt stets zu einer Verschlechterung der Druckfestigkeit und der Dimensionsstabilität, besonders in Langzeittests, so daß damit keine brauchbaren und qualitätsgerechten Schaumstoffe hergestellt werden können. Bereits in der EP-A-0 421 269 werden Mischungen aus Cyclopentan, Cyclohexan und niedrigsiedenden, mit Cyclopentan und/oder Cyclohexan homogen mischbaren Verbindungen mit einem Siedepunkt unter 35°C, ausgewählt aus der Gruppe der Alkane oder Cycloalkane mit maximal 4 Kohlenstoffatomen, vorgeschlagen.

Eine Erniedrigung der Rohdichte gegenüber rein cyclopentangetriebenen Hartschäumen trat aber nicht ein. In der EP-A-0 610 752 werden ebenfalls Treibmittelmischungen aus Cycloalkanen und linearen oder verzweigten Alkanen verwendet. Als Vorteile werden eine erniedrigte Wärmeleitfähigkeit und eine gute maschinentechnische Verarbeitbarkeit genannt. Eine Erniedrigung der frei geschäumten Rohdichte und damit der Schaumdichte von daraus hergestellten Formteilen wurde jedoch nicht erzielt und beschrieben.

Nach Dl erfolgt die Herstellung von PUR-Hartschaumstoffen unter Einsatz eines Gemisches aus Cyclopentan und C₃₋ und/oder C₄-Alkanen, ggf. in Verbindung mit Wasser, als Treibmittel. Auch hier wird keine Senkung der Rohdichte beschrieben.

Der Erfindung lag daher die Aufgabe zugrunde, PUR-Hartschaumstoffe herzustellen, die die angegebenen Nachteile nicht aufweisen und wobei insbesondere die Druckfestigkeit und die Langzeitdimensionsstabilität bei niedrigeren Rohdichten erhalten bleiben, so daß in der Anwendung eine sonst erforderliche hohe Schaumdichte vermieden werden kann.

Diese Aufgabe konnte überraschenderweise dadurch gelöst werden, daß eine Treibmittelmischung, bestehend aus Cyclopentan und einer mit Cyclopentan homogen mischbaren Zusammensetzung aus entweder mindestens einem Alkan und mindestens einem Alken mit jeweils 3 oder 4 Kohlenstoffatomen im Molekül oder mindestens einem Alken mit 3 oder 4 Kohlenstoffatomen im Molekül und dem aus Wasser und Isocyanat entstehenden Kohlendioxid, mit aromaten- und stickstoffhaltigen Polyethern als höhermolekulare Verbindungen mit mindestens zwei reaktiven Wasserstoffatomen kombiniert wird.

Gegenstand der Erfindung ist demzufolge ein Verfahren zur Herstellung von PUR-Hartschaumstoffen mit verringerter Rohdichte durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Treibmitteln,
e) Katalysatoren sowie gegebenenfalls
f) weiteren Hilfsmitteln und/oder Zusatzstoffen,
das dadurch gekennzeichnet ist, daß als Treibmittel (d) ein Gemisch aus
d1) Cyclopentan,
d2) einer mit Cyclopentan homogen mischbaren Zusammensetzung aus
   d2a) mindestens einem Alkan und mindestens einem Alken mit jeweils 3 oder 4 Kohlenstoffatomen im Molekül oder
   d2b)mindestens einem Alken mit 3 oder 4 Kohlenstoffatomen im Molekül und
d3) dem aus Wasser und Isocyanat entstehenden Kohlendioxid und als höhermolekulare Verbindung mit mindestens zwei reaktiven Wasserstoffatomen (b) aromaten- und stickstoffhaltige Polyether eingesetzt werden.

Gegenstand der Erfindung ist weiterhin die Verwendung der so hergestellten PUR-Hartschaumstoffe als Isoliermaterial.

Durch den Einsatz von aromaten- und stickstoffhaltigen Polyethern in der Komponente (b) und der beschriebenen Treibmittelmischung läßt sich überraschenderweise eine beträchtliche Erniedrigung der freigeschäumten Rohdichte und damit der Schaumdichte von daraus hergestellten Formteilen oder Gegenständen ohne die beschriebenen Nachteile der Verschlechterung der Druckfestigkeit und Dimensionsstabilität, besonders in Langzeittests, erzielen.

Es ist allgemein bekannt, daß die chemische Struktur der Polyole die Schaumeigenschaften beeinflußt. Durch die unterschiedlichen Startermoleküle und die unterschiedlichen Molekulargewichte der daraus hergestellten Polyole erzielt man nach der Umsetzung mit Isocyanaten bestimmte Eigenschaften. Dazu rechnen auch die Druckfestigkeit und die Dimensionsstabilität von Hartschäumen. Es war jedoch nicht zu erwarten, daß mit einer Veränderung der Polyolkomponente eine Erniedrigung der Schaumdichte von Formteilen erreicht wird und dabei die physikalisch-mechanischen Eigenschaften bei den niedrigen Rohdichten nicht verschlechtert werden.

Treibmittel mit höheren Dampfdrücken führen zu niedrigeren Rohdichten der Schäume, jedoch verschlechtern sich dadurch bestimmte Eigenschaften, wie z.B. die Druckfestigkeit, was nicht erwünscht ist.

Als Komponente (b) werden, gegebenenfalls in Verbindung mit weiteren höhermolekularen Verbindungen mit mindestens zwei reaktiven Wasserstoffatomen, aromaten- und stickstoffhaltige Polyether eingesetzt. Als aromaten- und stickstoffhaltige Polyether werden insbesondere solche auf Basis von aromatischen N,N- und N,N'dialkylsubstituierten Diaminen, wie 2,3-, 3,4-, 2,4- und 2,6-Toluylendiamin und 4,4'-, 2,4'- und 2,2'-Diaminodiphenylmethan, Polyphenylmethanpolyamin oder Gemischen aus den genannten Verbindungen hergestellte, eingesetzt. Vorteilhafterweise werden mit Toluylendiamin und/oder Polyphenylmethanpolyamin gestartete Polyether mit einer Hydroxylzahl zwischen 300 und 600 mg KOH/g in einer Menge von vorzugsweise 5 bis 25 Masse-%, insbesondere bevorzugt von 13 bis 18 Masse-%, bezogen auf die Gesamtmenge des Schaumstoffes, verwendet.

Die in Verbindung mit den aromaten- und stickstoffhaltigen Polyethern gegebenenfalls eingesetzten weiteren höhermolekularen Verbindungen mit mindestens zwei reaktiven Wasserstoffatomen sind weiter unten beschrieben. Der Anteil der erfindungsgemäß einzusetzenden aromaten- und/oder stickstoffhaltigen Polyether an der gesamten Komponente (b) beträgt dabei mindestens 15 Masse-%, vorzugsweise 30 bis 50 Masse-%.

Als Treibmittel (d)wird erfindungsgemäß ein Gemisch aus
d1) Cyclopentan,
d2) einer mit Cyclopentan homogen mischbaren Zusammensetzung aus
   d2a)mindestens einem Alkan und mindestens einem Alken mit jeweils 3 oder 4 Kohlenstoffatomen im Molekül oder
   d2b) mindestens einem Alken mit 3 oder 4 Kohlenstoffatomen im Molekül und
Wasser eingesetzt.

Als mit Cyclopentan homogen mischbare Verbindungen aus der Gruppe der Alkane mit 3 oder 4 Kohlenstoffatomen im Molekül werden Propan, n-Butan und/oder iso-Butan eingesetzt. Diese Verbindungen können einzeln oder im Gemisch untereinander verwendet werden. Vorteilhafterweise werden preiswerte, technisch verfügbare Gemische aus Propan und Butan eingesetzt. Besonders bevorzugt werden n-Butan und iso-Butan.

Als mit Cyclopentan homogen mischbare Verbindungen aus der Gruppe der Alkene mit 3 oder 4 Kohlenstoffatomen im Molekül werden vorzugsweise cis-2-Buten und/oder trans-2-Buten eingesetzt. Diese Verbindungen können einzeln oder im Gemisch untereinander verwendet werden.

Es können aber auch Butan-Buten-Gemische Verwendung finden.

Das Cyclopentan (d1) wird vorzugsweise in einer Menge von 0,1 bis 10 Masse-%, besonders bevorzugt von 3 bis 7 Masse-%, die Zusammensetzung (d2) wird vorzugsweise in einer Menge von 0,1 bis 6 Masse-%, besonders bevorzugt von 0,1 bis 3 Masse-%, jeweils bezogen auf die Gesamtmenge des Schaumstoffes, eingesetzt.

Neben den beschriebenen Treibmittelkomponenten wird Wasser als chemisch wirkendes Treibmittel eingesetzt. Das Wasser reagiert mit den Isocyanatgruppen der Komponente (a) unter Bildung von Kohlendioxid. Das Wasser wird vorzugsweise der Komponente (b) in einer Menge von 0,5 bis 5 Gew.-%, bezogen auf das Gewicht der Komponente (b), zugesetzt. Der Wasserzusatz kann auch gemeinsam mit den weiteren erfindungsgemäß zu verwendenden Treibmitteln erfolgen.

Das erfindungsgemäße Treibmittelgemisch kann separat durchvorheriges Vermischen der genannten Komponenten hergestellt werden. Die Treibmittelmischung wird dann in üblicher Weise vorzugsweise der weiter unten beschriebenen Polyolkomponente zugefügt. Es ist auch möglich, die Kohlenwasserstoffkomponenten einzeln in den Produktstrom, vorzugsweise die Polyolkomponente, unmittelbar vor der Zuführung zum Mischkopf für die Vermischung von Polyol- und Isocyanatkomponente zu dosieren. Außerdem ist die Dosierung in einen speziellen Mehrkomponenten-Mischkopf möglich. Die Handhabung der Kohlenwasserstoffe mit Pumpen, Dosieraggregaten und Vorratsbehältern erfolgt in bekannter Weise.

Die Herstellung der PUR-Hartschaumstoffe erfolgt durch Umsetzung in an sich bekannter Weise von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Treibmitteln,
e) Katalysatoren sowie gegebenenfalls
f) weiteren Hilfsmitteln und/oder Zusatzstoffen.

Zur Herstellung der PUR-Hartschaumstoffe nach dem erfindungsgemäßen Verfahren finden, mit Ausnahme der speziellen Treibmittelmischung (d) und neben den oben beschriebenen aromatenund stickstoffhaltigen Polyethern, die an sich bekannten Aufbaukomponenten Verwendung, zu denen im einzelnen folgendes auszuführen ist:
a) Als organische und/oder modifizierte organische Polyisocyanate kommen die an sich bekannten aliphatischen, cycloaliphatischen, araliphatischen und vorzugsweise aromatischen mehrwertigen Isocyanate in Frage, wie sie beispielsweise in EP-A-0 421 269 (Spalte 4, Zeile 49, bis Spalte 6, Zeile 22) oder in EP-A-0 719 807 (Spalte 2, Zeile 53, bis Spalte 4, Zeile 21) aufgeführt sind.
   Besonders bewährt haben sich Diphenylmethan-diisocyanat-Isomerengemische oder Roh-MDI mit einem Diphenylmethandiisocyantisomerengehalt von 33 bis 55 Masse-% und urethangruppenhaltige Polyisocyanatgemische auf Basis von Diphenylmethandiisocyanat mit einem NCO-Gehalt von 15 bis 33 Masse-%.
b) Als Verbindungen mit mindestens zwei gegenüber Isocyanaten reaktiven Wasserstoffatomen werden erfindungsgemäß die oben beschriebenen aromaten- und stickstoffhaltigen Polyether eingesetzt. Daneben können weitere Verbindungen mit mindestens zwei gegenüber Isocyanaten reaktiven Wasserstoffatomen verwendet werden. Hierfür kommen Verbindungen in Frage, die zwei oder mehrere reaktive Gruppen, ausgewählt aus OH-Gruppen, SH-Gruppen, NH-Gruppen, NH₂-Gruppen und CH-aciden Gruppen im Molekül tragen.
   Zweckmäßigerweise werden solche mit einer Funktionalität von 2 bis 8, vorzugsweise 2 bis 6, und einem mittleren Molekulargewicht von 300 bis 8000, vorzugsweise von 400 bis 4000, verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genanten Polyole. Vorzugsweise Anwendung finden Polyester-polyole und/oder Polyetherpolyole. Die Hydroxylzahl der Polyhydroxylverbindungen beträgt dabei in aller Regel 100 bis 850 und vorzugsweise 200 bis 600. Nähere Ausführungen zu den einsetzbaren Verbindungen sind beispielsweise aus EP-A-0 421 269 (Spalte 6, Zeile 23, bis Spalte 10, Zeile 5) oder EP-A-0 719 807 (Spalte 4, Zeile 23, bis Spalte 7, Zeile 55) ersichtlich.
c) Die PUR-Hartschaumstoffe können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen vorzugsweise aliphatische, cycloaliphatische und/oder araliphatische Diole mit 2 bis 14, vorzugsweise 4 bis 10 Kohlenstoffatomen. Nähere Ausführungen zu diesen und weiteren einsetzbaren Verbindungen sind beispielsweise aus EP-A-0 421 269 (Spalte 10, Zeilen 6 bis 48) zu entnehmen.
   Sofern zur Herstellung der Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Aufbaukomponente (b), zum Einsatz.
d) Erfindungsgemäß wird zur Herstellung der PUR-Hartschaumstoffe das oben beschriebene Treibmittelgemisch eingesetzt.
e) Als Katalysatoren (e) zur Herstellung der PUR-Hartschaumstoffe werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen. Die Isocyanatgruppen können durch geeignete Katalysatoren (e) aber auch miteinander zur Reaktion gebracht werden, wobei neben den Addukten zwischen Isocyanaten (a) und den Verbindungen mit wasserstoffaktiven Gruppen (b) vorzugsweise Isocyanuratstrukturen entstehen.
   Als Katalysatoren werden also insbesondere solche Stoffe verwendet, die Reaktionen der Isocyanate beschleunigen, insbesondere die Urethan-, Harnstoff- und Isocyanuratbildung.
   Bevorzugt hierfür sind tertiäre Amine, Zinn- und Bismutumverbindungen, Alkali- und Erdalkalicarboxylate, quarternäre Ammoniumsalze, s-Hexahydrotriazine und Tris-(dialkylaminomethyl)-phenole.
   Nähere Angaben zu einsetzbaren Katalysatoren sind beispielsweise aus EP-A-0 719 807 (Spalte 9, Zeilen 5 bis 56) zu entnehmen.
f) Der Reaktionsmischung zur Herstellung der PUR-Hartschaumstoffe können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Flammschutzmittel, Füllstoffe, Farbstoffe, Pigmente, Hydrolyseschutzmittel, fungistatische und bakteriostatisch wirkende Substanzen. Nähere Ausführungen zu den einsetzbaren Verbindungen sind beispielsweise aus EP-A-0 421 269 (Spalte 12, Zeile 55, bis Spalte 14, Zeile 16) oder EP-A-0 719 807 (Spalte 9, Zeile 58, bis Spalte 13, Zeile 17) ersichtlich.

Nähere Angaben über oben genannte und weitere übliche Ausgangsstoffe sind der Fachliteratur, beispielsweise der Monographie von J. H. Saunders und K. C. Frisch "High Polymers", Band XVI, Polyurethanes, Teil 1 und 2, Verlag Interscience Publishers, 1962 bzw. 1964 oder dem Kunststoffhandbuch, Polyurethane, Band VII, Carl-Hanser-Verlag, München, Wien, 1., 2. und 3. Auflage, 1966, 1983 bzw. 1993, zu entnehmen.

Zur Herstellung der PUR-Hartschaumstoffe werden die organischen und/oder modifizierten organischen Polyisocyanate (a), höhermolekularen Verbindungen mit mindestens zwei reaktiven wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,75:1, vorzugsweise 1,0 bis 1,3:1 und insbesondere 1,1 bis 1,2:1, beträgt. Falls die Hartschaumstoffe auf Isocyanatbasis zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 3 bis 8:1, angewandt.

Die Hartschaumstoffe werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Als besonders vorteilhaft hat es sich erwiesen, nach dem Zweikomponenten-Verfahren zu arbeiten und die Aufbaukomponenten (b), (d), (e) und gegebenenfalls (c) und (f) in der Komponente (A), der sogenannte Polyolkomponente, zu vereinigen und als Komponente (B), der sogenannten Isocyanatkomponente, die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 80°C, vorzugsweise von 20 bis 30°C, gemischt und in ein offenes oder gegebenenfalls unter erhöhtem Druck in ein geschlossenes, gegebenenfalls temperiertes, Formwerkzeug, eingebracht.

Die Formwerkzeugtemperatur beträgt zweckmäßigerweise 20 bis 110°C, vorzugsweise 30 bis 60°C und insbesondere 45 bis 50°C.

Die durch den erfindungsgemäßen Einsatz von aromaten- und stickstoffhaltigen Polyethern als höhermolekulare Verbindungen mit mindestens zwei reaktiven Wasserstoffatomen in Kombination mit der beschriebenen Treibmittelmischung hergestellten PUR-Hartschaumstoffe besitzen vorzugsweise Dichten von 25 bis 40 kg/m³. Die bei diesen erniedrigten Rohdichten ermittelten Druckfestigkeiten entsprechen dem Niveau der Hartschäume des Standes der Technik mit höheren Rohdichten. Die Dimensionsstabilitäten, insbesondere in Langzeittests, weisen ebenfalls keine Nachteile gegenüber herkömmlichen Hartschäumen mit höheren Rohdichten auf.

Die Produkte finden vorzugsweise als Isoliermaterial im Bau- und Kühlmöbelsektor Anwendung. Sie werden insbesondere als Zwischenschicht für Sandwichelemente oder zum Ausschäumen von Kühlschrank- und Kühltruhengehäusen eingesetzt.

Die Erfindung wird an den nachfolgenden Ausführungsbeispielen näher erläutert:

### Vergleichsbeispiele 1 - 3 und Ausführungsbeispiele 4 - 5:

Es wurden die in untenstehender Tabelle angegebenen Formulierungen zu PUR-Hartschaumstoffen verarbeitet.

Anschließend wurden die charakteristischen Eigenschaften, wie freigeschäumte Rohdichte, Formteilrohdichte, Druckfestigkeit und Dimensionsstabilität bestimmt.

Die Messung der Druckfestigkeit erfolgte nach DIN 53421 senkrecht zur Schäumrichtung.

Die Dimensionsstabilität im Langzeittest wurde an Würfeln der Abmessung 5 x 5 x 5 cm bestimmt, die 30 Tage einer konstanten Belastung von 0,05 N/mm² bei 22 ± 2°C ausgesetzt waren. Die Belastung erfolgte in Schäumrichtung.

Die Ergebnisse der Prüfungen sind im unteren Teil der Tabelle dargestellt und zeigen das gute Niveau der physiko-mechanischen Eigenschaften der Schaumstoffe mit niedrigerer Rohdichte im Vergleich zu den Schaumstoffen des Standes der Technik.

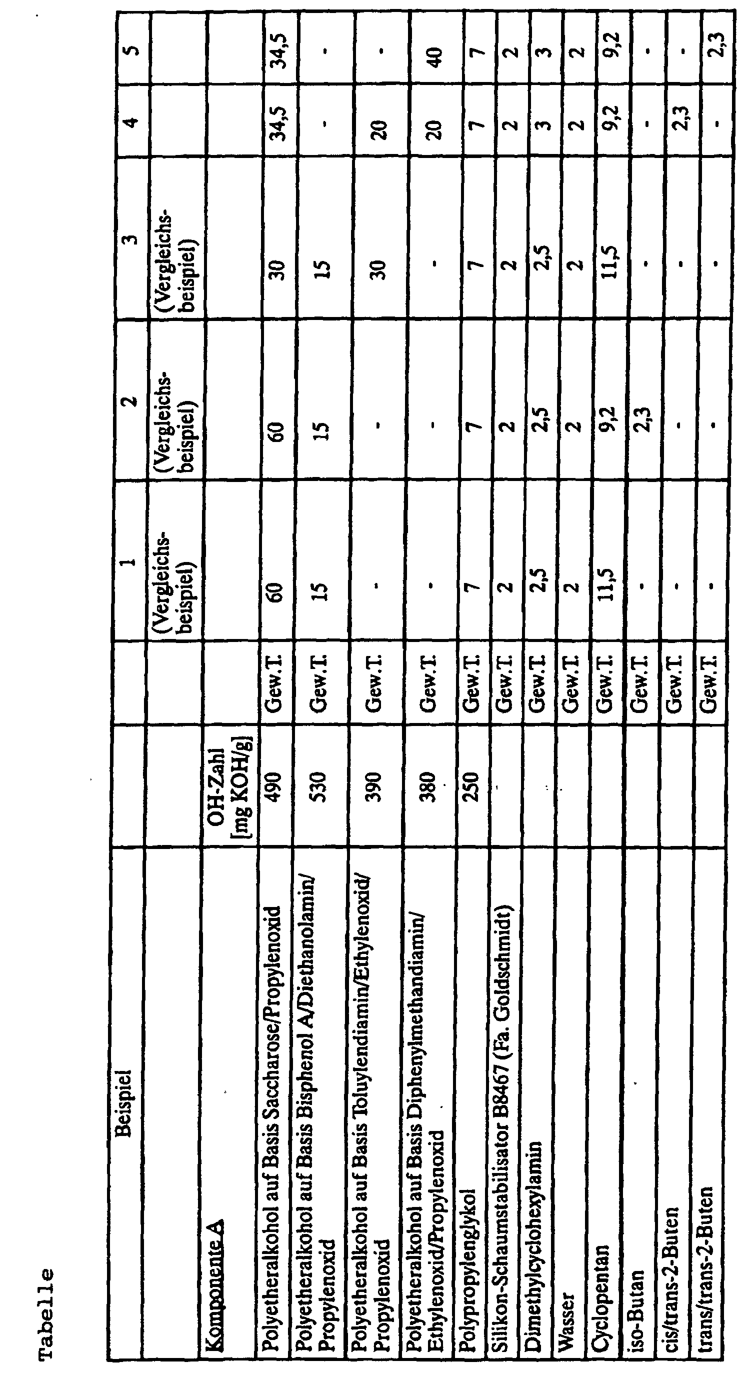

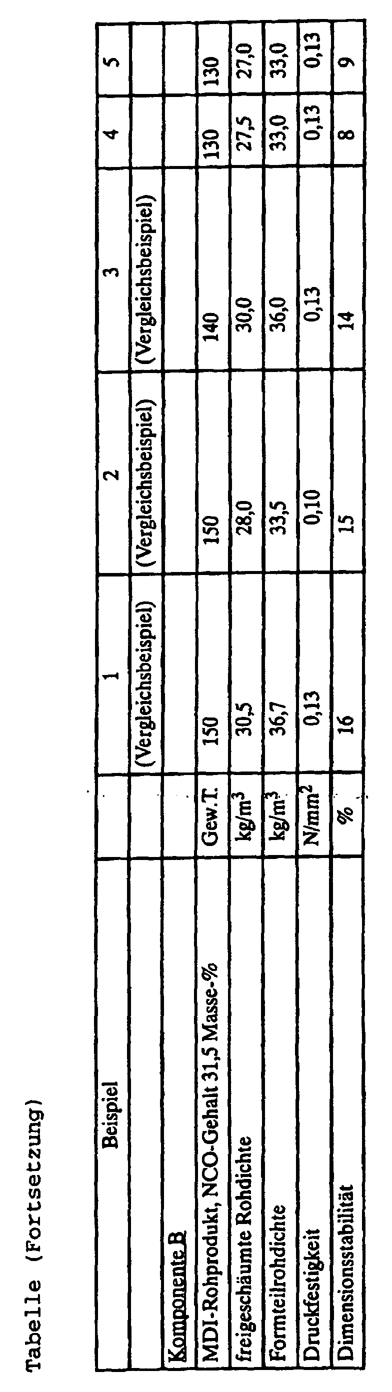

## Patentansprüche

1. Verfahren zur Herstellung von Polyurethan-Hartschaumstoffen mit verringerter Rohdichte durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren sowie gegebenenfalls
f) weiteren Hilfsmitteln und/oder Zusatzstoffen,
**dadurch gekennzeichnet, daß** als Treibmittel (d) ein Gemisch aus
d1) Cyclopentan,
d2) einer mit Cyclopentan homogen mischbaren Zusammensetzung aus
d2a) mindestens einem Alkan und mindestens einem Alken mit jeweils 3 oder 4 Kohlenstoffatomen im Molekül oder
d2b) mindestens einem Alken mit 3 oder 4 Kohlenstoffatomen im Molekül und
d3) dem aus Wasser und Isocyanat entstehenden Kohlendioxid und als höhermolekulare Verbindung mit mindestens zwei reaktiven Wasserstoffatomen (b) aromaten- und stickstoffhaltige Polyether eingesetzt werden.

2. Verfahren nach Anspruch 1, **dadurch gekennzeichnet, daß** die Treibmittelmischung als Alkane Propan, n-Butan und/oder iso-Butan und als Alkene cis-trans-2-Buten und/oder transtrans-2-Buten enthält.

3. Verfahren nach einem der Ansprüche 1 bis 2, **dadurch gekennzeichnet, daß** das Cyclopentan (d1) in einer Menge von 0,1 bis 10 Masse-% und die Zusammensetzung (d2) in einer Menge von 0,1 bis 6 Masse-%, jeweils bezogen auf die Gesamtmenge des Schaumstoffes, eingesetzt werden.

4. Verfahren nach einem der Ansprüche 1 bis 3, **dadurch gekennzeichnet, daß** als aromaten- und stickstoffhaltige Polyether mit Toluylendiamin und/oder Polyphenylmethanpolyamin gestartete Polyether verwendet werden.

5. Verfahren nach einem der Ansprüche 1 bis 4, **dadurch gekennzeichnet, daß** die Hydroxylzahl der aromaten- und stickstoffhaltigen Polyether zwischen 300 und 600 mg KOH/g liegt.

6. Verfahren nach einem der Ansprüche 1 bis 5, **dadurch gekennzeichnet, daß** die aromaten- und stickstoffhaltigen Polyether in einer Menge von 5 bis 25 Masse-%, bezogen auf die Gesamtmenge des Schaumstoffes, eingesetzt werden.

7. Verwendung der gemäß einem der Ansprüche 1 bis 6 hergestellten Polyurethan-Hartschaumstoffe als Isoliermaterial im Bau- und Kühlmöbelsektor.

## Claims

1. A process for producing rigid polyurethane foams with reduced density by reacting
a) organic and/or modified organic polyisocyanates with
b) at least one higher-molecular-weight compound having at least two reactive hydrogen atoms and, if desired,
c) low-molecular-weight chain extenders and/or crosslinkers
in the presence of
d) blowing agents,
e) catalysts and, if desired,
f) other auxiliaries and/or additives,
which comprises using, as blowing agent (d), a mixture of
d1) cyclopentane,
d2) with a composition which is homogeneously miscible with cyclopentane selected from
d2a)at least one alkane and at least one alkene, each having 3 or 4 carbon atoms in the molecule, or
d2b)at least one alkene having 3 or 4 carbon atoms in the molecule,
d3) with the carbon dioxide produced from water and isocyanate, and using, as higher-molecular-weight compound (b) having at least two reactive hydrogen atoms, polyethers which contain aromatics and nitrogen.

2. A process as claimed in claim 1, wherein the blowing agent mixture contains, as alkanes, propane, n-butane and/or isobutane and, as alkenes, cis-trans-2-butene and/or trans-trans-2-butene.

3. A process as claimed in claim 1 or 2, wherein cyclopentane (d1) is used in an amount of from 0.1 to 10% by weight and the composition (d2) is used in an amount of from 0.1 to 6% by weight, based in each case on the entire amount of the foam.

4. A process as claimed in any one of claims 1 to 3, wherein the polyethers which contain aromatics and nitrogen are polyethers initiated using tolylenediamine and/or polyphenylmethane polyamine.

5. A process as claimed in any one of claims 1 to 4, wherein the hydroxyl number of the polyethers which contain aromatics and nitrogen is from 300 to 600 mg KOH/g.

6. A process as claimed in any one of claims 1 to 5, wherein the polyethers which contain aromatics and nitrogen are used in an amount of from 5 to 25% by weight, based on the total amount of the foam.

7. The use of the rigid polyurethane foams produced as claimed in any one of claims 1 to 6 as insulating material in the building and refrigeration appliances sectors.

## Revendications

1. Procédé de préparation de mousses dures de polyuréthane de densité brute réduite, par réaction
a) de polyisocyanates organiques et/ou organiques modifiés, avec
b) au moins un composé de poids moléculaire élevé comprenant au moins deux atomes d'hydrogène réactifs et éventuellement
c) des agents prolongateurs de chaîne et/ou des agents de réticulation de faible poids moléculaire
en présence
d) d'agents gonflants,
e) de catalyseurs, et éventuellement
f) d'autres adjuvants et/ou additifs,
**caractérisé en ce que**, comme agent gonflant (d), on utilise un mélange constitué
d1) de cyclopentane,
d2) d'une composition miscible avec le cyclopentane de façon homogène, constituée
d2a) d'au moins un alcane et d'au moins un alcène ayant chacun 3 ou 4 atomes de carbone par molécule, ou
d2b) d'au moins un alcène ayant 3 ou 4 atomes de carbone par molécule, et
d3) du dioxyde de carbone formé à partir d'eau et d'isocyanate et, comme composé de poids moléculaire élevé (b) comprenant au moins deux atomes d'hydrogène réactifs, un polyéther azoté comprenant des parties aromatiques.

2. Procédé selon la revendication 1, **caractérisé en ce que** le mélange d'agents gonflants contient, en tant qu'alcane, du propane, du n-butane et/ou de l'iso-butane, et en tant qu'alcène, du cis-trans-2-butène et/ou du trans-trans-2-butène.

3. Procédé selon l'une des revendications 1 à 2, **caractérisé en ce que** le cyclopentane (d1) est mis en oeuvre en une quantité de 0,1 à 10 % en masse et la composition (d2) est mise en oeuvre en une quantité de 0,1 à 6 % en masse chacun par rapport à la quantité totale de la mousse.

4. Procédé selon l'une quelconque des revendications 1 à 3, **caractérisé en ce que** comme polyéther azoté comprenant des parties aromatiques, on utilise un polyéther obtenu à partir de toluylènediamine et/ou de polyphénylméthanepolyamine.

5. Procédé selon l'une quelconque des revendications 1 à 4, **caractérisé en ce que** l'indice d'hydroxyle du polyéther azoté comprenant des parties aromatiques est compris entre 300 et 600 mg de KOH/g.

6. Procédé selon l'une quelconque des revendications 1 à 5, **caractérisé en ce que** le polyéther azoté comprenant des parties aromatiques est mis en oeuvre en une proportion de 5 à 25 % en masse, par rapport à la quantité totale de la mousse.

7. Utilisation de la mousse dure de polyuréthane préparée selon l'une quelconque des revendications 1 à 6, en tant que matériau isolant dans les secteurs du bâtiment et des meubles réfrigérants.
